# EUROPÄISCHE PATENTANMELDUNG

(11) **EP 4 335 791 A1**
(43) Veröffentlichungstag der Anmeldung: **13.03.2024**
(21) Anmeldenummer: 23190059.8
(22) Anmeldetag: 07.08.2023
(51) Int. Cl.: B65G 43/08, B65C 9/04, B65G 47/244, B65G 47/84, B65G 47/86

(54) **BEHÄLTERTRANSPORTSYSTEM UND VERFAHREN ZUM TRANSPORT VON BEHÄLTERN**

(30) Priorität: 05.09.2022 DE 102022122377
(71) Anmelder: KRONES Aktiengesellschaft, 93073 Neutraubling (DE)
(72) Erfinder: Mayer, Josef, 93073 Neutraubling (DE)
(74) Vertreter: Grünecker Patent- und Rechtsanwälte PartG mbB

(57) **Zusammenfassung**

Die Erfindung betrifft ein Behältertransportsystem zum Transport einer Mehrzahl von Behältern entlang eines Transportwegs umfassend eine erste Behältertransportvorrichtung mit einer Mehrzahl von ersten Transportelementen zum Halten und Transportieren der Behälter, eine Erfassungsvorrichtung, eine zweite Behältertransportvorrichtung mit einer Mehrzahl von zweiten Transportelementen zum Halten und Transportieren der Behälter, wobei die zweite Behältertransportvorrichtung entlang des Transportwegs nach der ersten Behältertransportvorrichtung angeordnet ist. Dabei ist die Erfassungsvorrichtung eingerichtet, die Ausrichtung eines von einem ersten Transportelement gehaltenen Behälters zu erfassen, und die zweite Behältertransportvorrichtung ist eingerichtet, ein zweites Transportelement basierend auf der von der Erfassungsvorrichtung erfassten Ausrichtung des von dem ersten Transportelement gehaltenen Behälters auszurichten, um den Behälter aufzunehmen.

Die Erfindung betrifft auch ein Verfahren zum Transport von Behältern in einem derartigen Behältertransportsystem.

## Beschreibung

Die Erfindung betrifft ein Behältertransportsystem und ein Verfahren zum Transport von Behältern.

Behältertransportsysteme finden regelmäßig Anwendung bei der automatisierten Handhabung von Behältern, beispielsweise Kunststoffflaschen, in Anlagen der Konsumgüter- und/oder Lebensmittelindustrie.

Im Rahmen der fortschreitenden Entwicklung solcher Anlagen werden diese verblockt, so dass die einzelnen Maschinen über Transfersterne direkt miteinander verbunden sind, wie beispielsweise in der EP 2 292 550 A1 beschrieben wird. Die Verarbeitung der Kunststoffflaschen erfolgt in einem Block. Beispielsweise umfasst ein Block eine Blasmaschine, in der Vorformlinge erhitzt und in die endgültige Flaschenform geblasen werden, eine Etikettiermaschine, die Etiketten auf die Flaschen aufbringt, und einen Füller, der Flaschen mit dem Füllmedium, beispielsweise ein flüssiges Lebensmittel, Öl, oder anderes fließfähiges Medium füllt.

Dabei erfolgt die Handhabung der Flaschen von der Blasmaschine zur Etikettiermaschine und von der Etikettiermaschine zum Füller im Neckhandling durch sogenannte Transfersterne. In den Transfersternen werden die Flaschen beispielsweise durch Greifer am Hals umgriffen.

Im Neckhandling sind die Flaschen in einem gewissen Maße frei um Längsachsen der Flaschen drehbar, so dass sich unterschiedliche Ausrichtungen der Flaschen in den Greifern einstellen. Eine Korrektur der Drehlage ist im Neckhandling nicht ohne Weiteres möglich.

Die Handhabung der Flaschen in der Etikettiermaschine erfolgt beispielsweise im stehenden Transport auf Tellern. Dadurch kann die Ausrichtung der Flaschen gegenüber der Maschine, die das Etikett aufbringt besser kontrolliert werden, als im Neckhandling. Im stehenden Transport verdrehen die Flaschen auch nicht so leicht, wie in einem Greifer im Neckhandling.

Für die exakte Ausrichtung der Flaschen gegenüber der Maschine, die das Etikett aufbringt, ist es wichtig, dass die Flaschen einen festen Sitz auf und/oder in dem Teller aufweisen. Die Aufnahme der Flaschen auf und/oder in dem Teller ist idealerweise an die Grundfläche der Flaschen angepasst.

Mit üblichen runden Aufnahmen wird eine zufriedenstellende Anpassung an runde und teils auch quadratische Flaschenformen erreicht. Die Flaschen werden mit den Aufnahmen zum Aufbringen von Etiketten ausgerichtet.

Aus der WO 03/024808 A2 und der WO 2008/028524 A1 sind beispielsweise Vorrichtungen zum Ausrichten von runden Behältern zum Anbringen von Etiketten bekannt.

Die DE 20 2009 018 193 U1 befasst sich mit der Ausrichtung von runden Flaschen anhand einer Markierung zum Bedrucken der Flaschen in hängender Aufnahme und beschreibt das Halten an ein- und derselben Halte- und Zentriereinheit vom Behältereinlauf bis zum Behälterauslauf.

Rechteckige Flaschen können jedoch beispielsweise nicht problemlos von runden tellerartigen Aufnahmen aufgenommen, gehalten und transportiert werden. Für rechteckige Flaschenformen ist eine an die Flaschenform angepasste Aufnahme erforderlich.

Eine Herausforderung ist dabei, die rechteckigen Flaschen an die Aufnahmen richtig zu übergeben und Probleme bei der Übergabe von beliebig geformten Flaschen zu vermeiden.

Angesichts dessen besteht die der Erfindung zugrundeliegende Aufgabe darin, Probleme bei der Übergabe von Behältern zu vermeiden.

Diese Aufgabe wird durch ein Behältertransportsystem gemäß Anspruch 1 gelöst.

Die Erfindung stellt ein Behältertransportsystem zum Transport einer Mehrzahl von Behältern entlang eines Transportwegs bereit, umfassend eine erste Behältertransportvorrichtung mit einer Mehrzahl von ersten Transportelementen zum Halten und Transportieren der Behälter, eine Erfassungsvorrichtung, eine zweite Behältertransportvorrichtung mit einer Mehrzahl von zweiten Transportelementen zum Halten und Transportieren der Behälter, wobei die zweite Behältertransportvorrichtung entlang des Transportwegs nach der ersten Behältertransportvorrichtung angeordnet ist, wobei die Erfassungsvorrichtung eingerichtet ist, die Ausrichtung eines von einem ersten Transportelement gehaltenen Behälters zu erfassen, wobei die zweite Behältertransportvorrichtung eingerichtet ist, ein zweites Transportelement basierend auf der von der Erfassungsvorrichtung erfassten Ausrichtung des von dem ersten Transportelement gehaltenen Behälters auszurichten, um den Behälter aufzunehmen.

Das erfindungsgemäße Behältertransportsystem löst die zugrundeliegende Aufgabe, Probleme bei der Übergabe von Behältern zu vermeiden, die durch ein nicht ausgerichtetes Transportelement entstehen.

Die Erfassung der Ausrichtung eines Behälters an bzw. in der ersten Transportvorrichtung, die entlang des Transportwegs vor der zweiten Transportvorrichtung, also stromaufwärts angeordnet ist, erlaubt eine besonders effiziente und zuverlässige Bestimmung der (erforderlichen) Ausrichtung eines zweiten Transportelements der zweiten (stromabwärts angeordneten) Transportvorrichtung, das den Behälter aufnehmen bzw. annehmen wird.

Die Anordnung der zweiten Behältertransportvorrichtung entlang des Transportwegs nach der ersten Behältertransportvorrichtung bedeutet, dass die zweite Behältertransportvorrichtung in Richtung der Weitergabe der Behälter (im Betrieb des Behältertransportsystems und entlang des Transportwegs) angeordnet ist. Diese Richtung ist also die Richtung, in die die Behälter weitergegeben oder transportiert werden, das heißt insbesondere eine Richtung von der ersten Behältertransportvorrichtung zur zweiten Behältertransportvorrichtung.

Zwischen dem Erfassen der Ausrichtung des Behälters und dem Aufnehmen des Behälters ändert sich die Ausrichtung des Behälters nicht, oder lediglich vorhersagbar. Von der erfassten Ausrichtung des Behälters kann auf die Ausrichtung des Behälters zum Zeitpunkt des Aufnehmens geschlossen werden.

Die von der Erfassungsvorrichtung erfasste Ausrichtung (oder Orientierung bzw. Positionierung) des Behälters kann eine Ausrichtung (Orientierung bzw. Positionierung) des Behälters bezüglich der Transportrichtung des Behälters sein.

Mit Transportrichtung kann im Fall eines kreisförmigen Transportwegs (beispielsweise in einem Rundläufer wie einem Transferstern oder Karussell) des Behälters eine Tangente an den Transportweg gemeint sein. Im Fall eines linearen Transportwegs kann die Transportrichtung mit der Wegrichtung zusammenfallen.

Die Ausrichtung kann ein Winkel zur Transportrichtung in der Transportebene sein. Dabei kann die Transportebene mit der Ebene zusammenfallen, in der die Behälter transportiert werden. Außerdem kann die Ausrichtung die Drehorientierung und/oder Drehlage des Behälters um eine senkrechte Achse und/oder eine Längsachse des Behälters bezüglich einer Ebene, die tangential zu der Transportrichtung ist und in der die Achse liegt, sein. Mit der senkrechten Achse und/oder der Längsachse des Behälters können zentrale Achsen gemeint sein.

Die Ausrichtung kann der Winkel sein, den in einer Querschnittsebene von oben betrachtet eine charakteristische Achse und/oder eine zentrale Längsachse und/oder eine große Halbachse der Querschnittsform des Behälters mit der Transportrichtung einschließt. Dabei ist "von oben" aus der Richtung der Flaschenöffnung kommend im Gegensatz zu "von unten" als aus der Richtung des Flaschenbodens kommend.

Weiterhin kann die Ausrichtung die Drehorientierung und/oder Drehlage und/oder der Winkel des Behälters um eine senkrechte Achse und/oder eine Längsachse des Behälters bezüglich einer radialen Richtung und/oder eines Radius der ersten Behältertransportvorrichtung sein.

Das Ausrichten des zweiten Transportelements kann ein Einstellen und/oder Drehen und/oder Positionieren sein.

Das Ausrichten des zweiten Transportelements für das Aufnehmen des Behälters kann ein Ausrichten bei dem Aufnehmen und/oder ein Ausrichten vor dem Aufnehmen sein.

Das zweite Transportelement kann bei dem Aufnehmen des Behälters und/oder zum Zeitpunkt des Aufnehmens des Behälters auf den Behälter ausgerichtet sein.

Das Aufnehmen des Behälters kann ein Entgegennehmen und/oder eine Annahme und/oder eine Übergabe sein.

Das Behältertransportsystem kann eine Steuerungsvorrichtung umfassen, wobei die Steuerungsvorrichtung ausgebildet ist, basierend auf der erfassten Ausrichtung ein Ausrichtesignal zur Ausrichtung des zweiten Transportelements zu erzeugen.

Die Steuerungsvorrichtung dient der Steuerung zwischen der Erfassungsvorrichtung und dem zweiten Transportelement und ermöglicht dadurch, den Zustand des Behältertransportsystems besser zu berücksichtigen.

Die Steuerungsvorrichtung kann als Teil der ersten Behältertransportvorrichtung und/oder als Teil der zweiten Behältertransportvorrichtung und/oder als Teil der Erfassungsvorrichtung und/oder als eigenständige Vorrichtung ausgebildet sein. Insbesondere kann die Steuerungsvorrichtung eine zentrale Steuerungsvorrichtung sein oder die Steuerungsvorrichtung kann mehrere dezentrale Teile umfassen.

Die Erfassungsvorrichtung kann mit der zweiten Behältertransportvorrichtung drahtlos und/oder drahtgebunden verbunden sein.

Durch eine drahtlose Verbindung wird ein hohes Maß an Flexibilität der Verbindung erreicht und Kabel werden eingespart. Außerdem wird durch eine drahtlose Verbindung die Komplexität von Schleifkontakten zur Verbindung von beweglichen Teilen des Behältertransportsystems vermieden. Eine drahtgebundene Verbindung ermöglicht hohe Übertragungssicherheit und Datenrate und weitgehende Unabhängigkeit von Störeinflüssen.

Die drahtgebundene Verbindung kann über die Steuerungsvorrichtung erfolgen.

Die Verbindung kann mittels eines Bus erfolgen. Die drahtlose Verbindung kann über Bluetooth und/oder WIFI eingerichtet sein.

Das Behältertransportsystem kann zu einer Zuordnung des Ausrichtesignals zu dem zweiten Transportelement eine Speichervorrichtung, insbesondere ein Schieberegisters, aufweisen.

Die Verwendung einer Speichervorrichtung ermöglicht das Hinterlegen des Ausrichtesignals zur späteren Wiederverwendung. Ein Schieberegister stellt eine einfache Realisierung einer Speichervorrichtung dar mit einer inhärent vorteilhaften Speicherstruktur, um eine Reihenfolge abzubilden. Dadurch werden Speicherressourcen eingespart.

Die Speichervorrichtung kann die Ausrichtung des Behälters speichern.

Die zweite Behältertransportvorrichtung kann eingerichtet sein, das zweite Transportelement zum Ausrichten um eine senkrechte Achse zu drehen.

Das Drehen des zweiten Transportelements um eine senkrechte Achse ermöglicht auf einfache Art und Weise ein Ausrichten des zweiten Transportelements und damit ein sicheres Halten des Behälters.

Die ersten Transportelemente können zum hängenden oder stehenden Transport der Behälter ausgebildet sein. Alternativ oder zusätzlich können die ersten Transportelemente im Fall der Ausbildung für den hängenden Transport Greifer umfassen, oder im Fall der Ausbildung für den stehenden Transport Teller mit Aufnahmen für die Behälter umfassen. Alternativ oder zusätzlich können die zweiten Transportelemente zum hängenden oder stehenden Transport der Behälter ausgebildet sein. Alternativ oder zusätzlich können die zweiten Transportelemente im Fall der Ausbildung für den hängenden Transport Greifer umfassen, oder im Fall der Ausbildung für den stehenden Transport Teller mit Aufnahmen für die Behälter umfassen. Alternativ oder zusätzlich kann es sich bei den Behältern um Flaschen handeln.

Der hängende Transport der Behälter ermöglicht einen kompakten Aufbau der Behältertransportvorrichtung und leichte Zugänglichkeit der Behälter. Der stehende Transport der Behälter hat den Vorteil, dass die Ausrichtung der Behälter auf einfache Art und Weise möglich ist.

Die Behälter können in den ersten und/oder den zweiten Transportelementen aufrecht gehalten und transportiert werden.

Insbesondere können die ersten Transportelemente zum hängenden Transport der Behälter Greifer umfassen und die zweiten Transportelemente zum stehenden Transport der Behälter Teller mit Aufnahmen für die Behälter umfassen. Insbesondere kann es sich bei der ersten Behältertransportvorrichtung um einen Transferstern und bei der zweiten Behältertransportvorrichtung um ein Karussell handeln.

Die Teller können im Fall der Ausbildung für den stehenden Transport eine von der kreisrunden Form abweichende, insbesondere eine elliptische oder polygonale, insbesondere eine rechteckige, insbesondere eine quadratische, Grundfläche aufweisen.

Durch die geformten Grundflächen der Transportelemente kann der stehende Transport in den Transportelementen flexibel an unterschiedliche Behälterformen angepasst werden und sicher gestaltet werden.

Insbesondere können die Aufnahmen der Teller eine von der kreisrunden Form abweichende, insbesondere eine elliptische oder polygonale, insbesondere eine rechteckige, insbesondere eine quadratische, Grundfläche aufweisen.

Mit sämtlichen vieleckigen Grundflächen können auch entsprechende Grundflächen mit abgerundeten Ecken gemeint sein.

Die Behälteraufnahmen können der Behälterbodengeometrie angepasst sein. Die Behälteraufnahme kann derart ausgeführt sein, um zumindest teilweise formschlüssig am Behälterboden angreifen zu können. Damit kann ein in eine Behälteraufnahme eingearbeitetes Vieleck, Oval oder dgl. gemeint sein oder auch ein Profil (z.B. Vertiefung) auf der Behälteraufnahme für einen Behälterboden mit mehreren Standfüßen, beispielsweise einen Petaloid-Boden. Damit kann sich in besonders vorteilshafter Weise ein besonders guter rotatorischer Krafteintrag bei geringerer Vorspannkraft durch Zentriertulpen, beispielsweise zum späteren Ausrichten der Behälter zur Weiterbehandlung ergeben.

Die Erfassungsvorrichtung kann eine Bilderfassungsvorrichtung, insbesondere eine Kamera, aufweisen. Alternativ oder zusätzlich kann die Erfassungsvorrichtung einen Drehwinkelsensor, insbesondere einen Drehwinkelsensor basierend auf einem Potentiometer, aufweisen. Alternativ oder zusätzlich kann die Erfassungsvorrichtung im Fall der Bilderfassungsvorrichtung ausgebildet sein, ein erstes Transportelement von unterhalb und/oder oberhalb und/oder seitlich zu erfassen. Alternativ oder zusätzlich kann die Erfassungsvorrichtung im Fall der Bilderfassungsvorrichtung ausgebildet sein, die Ausrichtung des von dem ersten Transportelement gehaltenen Behälters durch die Aufnahme eines Bildes zu erfassen.

Mithilfe der Erfassungsvorrichtung wird auf einfache Art und Weise eine Information über die Ausrichtung des Behälters in dem ersten Transportelement erhalten.

Die Erfassungsvorrichtung kann ausgebildet sein, die Behälter von unterhalb und/oder oberhalb und/oder seitlich zu erfassen.

Dabei ist "von oberhalb" von oben in Richtung auf die Flaschenöffnung gerichtet im Gegensatz zu "von unterhalb" als von unten in Richtung auf den Flaschenboden gerichtet.

Aus dem Bild kann ein Winkel ermittelt werden, der die Ausrichtung (Orientierung bzw. Positionierung) des Behälters beschreibt. Beispielsweise kann in einem Bild eines von dem ersten Transportelement gehaltenen Behälters von oberhalb ein Winkel ermittelt werden, den eine große Halbachse eines Behälterquerschnitts mit der Transportrichtung einschließt. Basierend auf diesem Winkel kann die zweite Behältertransportvorrichtung das zweite Transportelement ausrichten, um den Behälter aufzunehmen.

Für den Fall, dass das Behältertransportsystem eine Steuerungsvorrichtung umfasst, kann die Steuerungsvorrichtung Bilder der Kamera erhalten und auswerten.

Das Behältertransportsystem kann eingerichtet sein, die Ausrichtung ohne Unterbrechung des Transports des Behälters zu erfassen.

Die Erfassung der Ausrichtung ohne Unterbrechung des Transports ermöglicht den flüssigen und schnellen Transport der Behälter.

Durch die Erfassung der Ausrichtung ohne Unterbrechung des Transports des Behälters wird der Transport nicht angehalten und/oder die Behälter nicht auf einer Nebenstrecke transportiert.

In Falle einer Nichterkennung der Drehlage eines oder mehrerer Behälter, können diese vor Erreichen der zweiten Behältertransportvorrichtung, insbesondere aus den Transferstern oder Einlaufstern, ausgeleitet werden.

Die zweite Behältertransportvorrichtung kann einen Stell- und/oder Schritt- und/oder Servomotor umfassen, wobei das zweite Transportelement durch den Stell- und/oder Schritt- und/oder Servomotor ausgerichtet werden kann.

Durch den Stell- und/oder Schritt- und/oder Servomotor wird auf einfache, genaue und zielgerichtete Art und Weise eine Ausrichtung des zweiten Transportelements ermöglicht.

Die zweite Behältertransportvorrichtung kann mehrere Stell- und/oder Schritt- und/oder Servomotoren, insbesondere jeweils einen Stell- und/oder Schritt- und/oder Servomotor je zweitem Transportelement, umfassen.

Das Behältertransportsystem kann Teil eines Blocks sein. Alternativ oder zusätzlich kann die zweite Behältertransportvorrichtung ein Karussell sein. Alternativ oder zusätzlich kann die erste Behältertransportvorrichtung ein Transferstern oder ein Einlaufstern sein.

Dadurch wird eine flexible Gestaltung des Behältertransportsystems ermöglicht.

In einem Block können sämtliche Karusselle durch Linearförderer und/oder Rundläufer miteinander verbunden sein, insbesondere können in einem Block sämtliche Karusselle ausschließlich durch Linearförderer und/oder Rundläufer miteinander verbunden sein.

Das Behältertransportsystem kann eine Aufbringungsvorrichtung umfassen, wobei die Aufbringungsvorrichtung ausgebildet sein kann, Etiketten auf die Behälter der zweiten Behältertransportvorrichtung aufzubringen und/oder die Behälter der zweiten Behältertransportvorrichtung zu bedrucken.

Durch das Aufbringen von Etiketten auf die Behälter der zweiten Behältertransportvorrichtung und/oder das Bedrucken der Behälter wird eine Multifunktionalität der zweiten Behältertransportvorrichtung mit dem Halten, Transportieren und zeitgleichen Behandeln der Behälter erreicht.

Die Aufbringungsvorrichtung kann ein Etikettieraggregat sein.

Die zweite Behältertransportvorrichtung kann ausgebildet sein, das zweite Transportelement nach dem Aufnehmen des Behälters in eine vordefinierte Ausrichtung, insbesondere in Transportrichtung, auszurichten.

Durch das Ausrichten des zweiten Transportelements wird die Handhabung und weitere Bearbeitung von Behältern mit beliebiger Form ermöglicht.

Das Ausrichten kann ein Einstellen und/oder Drehen und/oder Positionieren sein.

Das Ausrichten des zweiten Transportelements kann basierend auf der erfassten (und ggf. gespeicherten) Ausrichtung des von dem ersten Transportelement gehaltenen Behälters erfolgen, also insbesondere nicht auf einem weiteren Erfassungsschritt basieren.

Das Ausrichten des zweiten Transportelements kann durch den Stell- und/oder Schritt- und/oder Servomotor erfolgen.

Das Ausrichten kann insbesondere ein Ausrichten zum Aufbringen eines Etiketts sein. Das Ausrichten kann ein Ausrichten für das Aufbringen eines Etiketts und/oder ein Ausrichten bei dem Aufbringen eines Etiketts und/oder ein Ausrichten vor dem Aufbringen eines Etiketts sein.

Die zweite Behältertransportvorrichtung kann entlang des Transportwegs direkt nach der ersten Behältertransportvorrichtung folgen, oder eine weitere Behältertransportvorrichtung kann dazwischen angeordnet sein.

Durch die Möglichkeit, eine weitere Behältertransportvorrichtung vorzusehen oder nicht vorzusehen ist das Behältertransportsystem flexibel an äußere Bedingungen anpassbar.

Im Fall der Anordnung der weiteren Behältertransportvorrichtung zwischen der ersten Behältertransportvorrichtung und der zweiten Behältertransportvorrichtung kann eine Übergabe der Behälter von der ersten Behältertransportvorrichtung an die weitere Behältertransportvorrichtung und von dieser an die zweite Behältertransportvorrichtung erfolgen. Dann ist die Übergabe von der ersten Behältertransportvorrichtung an die zweite Behältertransportvorrichtung indirekt.

Die erste Behältertransportvorrichtung kann ein Transferstern sein, der an einen Einlaufstern als weitere Behältertransportvorrichtung übergibt, der wiederum an ein Karussell als zweite Behältertransportvorrichtung übergibt.

Das Behältertransportsystem kann beliebige Kombinationen und/oder Aneinanderreihungen von Behältertransportvorrichtungen umfassen. Zwischen der ersten und der zweiten Behältertransportvorrichtung können eine oder mehrere weitere Behältertransportvorrichtungen angeordnet sein.

Die Erfindung stellt weiterhin ein Verfahren kann zum Transport einer Mehrzahl von Behältern in einem Behältertransportsystem in analoger Weise wie oben beschrieben bereit, umfassend ein Erhalten einer Ausrichtung eines von einem ersten Transportelement gehaltenen Behälters von der Erfassungsvorrichtung, ein Bestimmen des dem Behälter bei der Übergabe entsprechenden zweiten Transportelements aus der Menge der zweiten Transportelemente, ein Berechnen einer Soll-Ausrichtung des zweiten Transportelements basierend auf der Ausrichtung, ein Ansteuern und Ausrichten des zweiten Transportelements gemäß der Soll-Ausrichtung, sowie ein Übergeben des Behälters von dem ersten Transportelement an das zweite Transportelement.

Ein derartiges Verfahren ermöglicht, einen unterbrechungsfreien Transport in einem Behältertransportsystem sicherzustellen.

Die vorliegende Erfindung wird anhand der nachfolgenden beispielhaften Ausführungsformen unter Bezugnahme auf die Figuren näher beleuchtet, ohne die Erfindung auf die speziellen dargestellten Ausführungsformen zu beschränken. Dabei zeigen
- Fig. 1: schematisch ein Behältertransportsystem,
- Fig. 2: schematisch eine Ansicht der Ausrichtung eines Behälters in der ersten Behältertransportvorrichtung,
- Fig. 3: ein Blockdiagramm während des Betriebs des Behältertransportsystems.

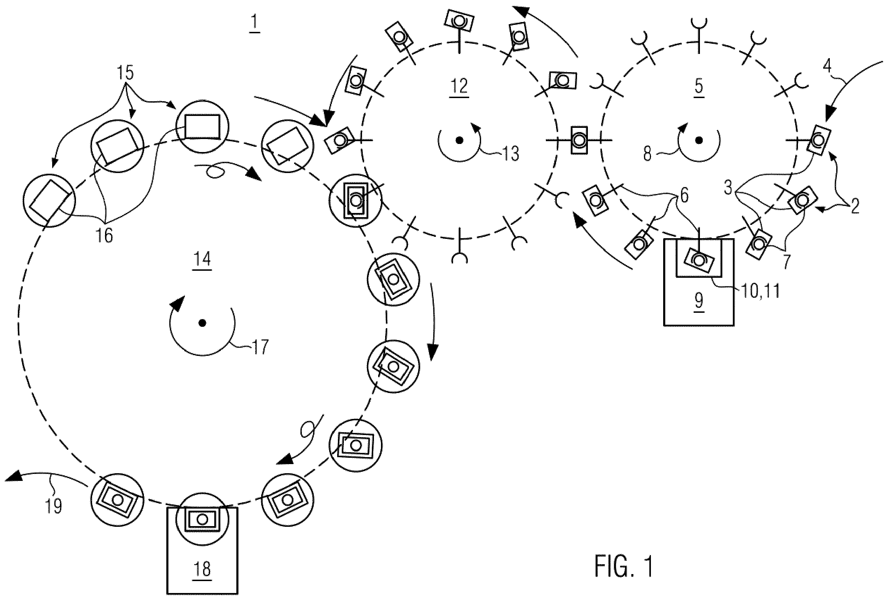

Fig. 1 illustriert den schematischen Aufbau eines Ausführungsbeispiels eines Behältertransportsystems 1. In dem dargestellten Behältertransportsystem 1 werden Behälter in Form von Kunststoffflaschen 2 mit einer rechteckigen Grundfläche 3 transportiert.

Ein solches Behältertransportsystem 1 ist beispielsweise in einer verblockten Anlage der Lebensmittel- und/oder Konsumgüterindustrie einer Blasmaschine in Richtung der Weitergabe der Flaschen 2 nachfolgend angeordnet. Auf das gezeigte Behältertransportsystem 1 folgt typischerweise eine Füllmaschine, in der die Flaschen beispielsweise mit einem Getränk befüllt werden. Eine Verblockung der Anlage kann wie in der EP 2 292 550 A1 beschrieben ausgestaltet sein. Die einzelnen Maschinen einer derart verblockten Anlage sind nur durch zwischengeschaltete Transfersterne miteinander verbunden.

Die Fig. 1 zeigt eine Richtung 4, aus der die Flaschen 2 an den Transferstern 5 als erste Behältertransportvorrichtung von der Blasmaschine kommend unausgerichtet übergeben werden. Der Transferstern 5 hält und transportiert die Flaschen mittels erster Transportelemente in Form von Greifern 6. Die Greifer 6 sind beabstandet entlang des Umfangs des kreisrund ausgeprägten Transfersterns 5 angeordnet und öffnen radial nach außen hin. Die Greifer 6 greifen die Flaschen am Hals 7 in einem sogenannten Neckhandling.

Der Transferstern 5 dreht sich an die Geschwindigkeit des Rundläufers, von dem er die Flaschen übernimmt, angepasst im Uhrzeigersinn 8 und transportiert die Flaschen 2 auf einer kreisförmigen Bahn des Transportwegs.

Eine Kamera 9 erfasst als Erfassungsvorrichtung den Transportweg und die Greifer 6 des Transfersterns. Die Kamera 9 ist oberhalb der Flaschen 2 und der Greifer 6 angeordnet. Ihr Aufnahmefeld erfasst eine Flasche 2, die durch das Aufnahmefeld der ortsfesten Kamera 9 transportiert wird. Zu dem Zeitpunkt, in dem die Flasche 2 zentral in dem Aufnahmefeld liegt, nimmt die Kamera 9 ein Bild 10 auf. Das Bild 10 zeigt dann eine Draufsicht 11 der rechteckigen Flasche 2 von oben. Aus der Draufsicht 11 der Flasche und der bekannten Ausrichtung der Kamera 9 bezüglich des Transfersterns 5 wird eine Ausrichtung der Flasche 2 bezüglich der Transportrichtung der Flasche 2 bestimmt.

Von dem Transferstern 5 erfolgt eine Übergabe der Flaschen 2 an eine als Einlaufstern 12 ausgebildete weitere Behältertransportvorrichtung. Der Einlaufstern 12 greift die Flaschen 2 ebenfalls im Neckhandling durch Greifer 6. Während der Übergabe der unausgerichteten Flaschen 2 sind die Greifer 6 des Transfersterns 5 und die Greifer 6 des Einlaufsterns 12 in senkrechter Richtung übereinander angeordnet, so dass im Moment der Übergabe beide Greifer 6 die Flasche halten. Die Greifer 6 des kreisrunden Einlaufsterns 12 sind beabstandet entlang des Umfangs angeordnet. Die Greifer 6 öffnen radial nach außen hin. Der Einlaufstern 12 dreht sich im Gegenuhrzeigersinn 13 mit einer an die Geschwindigkeit des Transfersterns 5 angepassten Geschwindigkeit und transportiert die Flaschen 2 auf einer kreisförmigen Bahn des Transportwegs.

Von dem Einlaufstern 12 erfolgt die Übergabe der Flaschen an eine als Etikettierkarussell 14 ausgebildete zweite Behältertransportvorrichtung. In dem Etikettierkarussell 14 werden die Flaschen 2 auf Tellern 15 als zweite Transportelemente stehend gehalten und transportiert. Die Teller 15 nehmen die Flaschen 2 auf und weisen an die rechteckige Grundfläche 3 der Flaschen 2 angepasste vertiefte Aufnahmen 16 auf, um die Flaschen 2 während des Transports und dem Etikettieren stabil zu halten. Jeder Teller 15 weist einen Drehwinkelsensor 27 auf, der die jeweilige Ausrichtung des Tellers 15 um eine senkrechten Achse des Tellers bezüglich der Transportrichtung erfasst. Die Teller 15 sind entlang des Umfangs des Etikettierkarussells beabstandet angeordnet. Das Etikettierkarussell 14 dreht sich im Uhrzeigersinn 17 mit einer an die Geschwindigkeit des Einlaufsterns 12 angepassten Geschwindigkeit und transportiert die Flaschen 2 auf einer kreisförmigen Bahn des Transportwegs.

Einer Steuerungsvorrichtung 26 ist zu jedem von der Kamera 9 erfassten Greifer 6, der eine Flasche 2 hält, ein entsprechender Teller 15 des Etikettierkarussells 14 bekannt. Der Teller 15 entspricht jeweils dem Teller 15, der von dem jeweiligen Greifer 6 eine Flasche übergeben bekommt.

In dem Transferstern 5 und dem Einlaufstern 12 erfolgt der Transport der Flaschen 2 zwar unausgerichtet, jedoch ändert sich die Ausrichtung der Flaschen 2 von der Bildaufnahme bis zur Übergabe an das Etikettierkarussell 14 nicht oder lediglich reproduzierbar und vorhersagbar.

Basierend auf der Ausrichtung einer Flasche 2 in dem Transferstern 5 und der durch den Drehwinkelsensor 27 erfassten Ausrichtung des entsprechenden Tellers 15 erzeugt die Steuerungsvorrichtung 26 ein Ausrichtesignal. Das Ausrichtesignal wird in einem Schieberegister gespeichert und zum Ausrichtungszeitpunkt an das Etikettierkarussell 14 gesendet, das den Teller 15 ausrichtet. Die rechteckige Flasche 2 wird in die rechteckige Aufnahme 16 des Tellers 15 bei der Übergabe passgenau aufgenommen.

Zu diesem Zeitpunkt ist der Steuerungsvorrichtung 26 die Ausrichtung des Tellers 15 und der Flasche 2 auf dem Teller 15 aus der ursprünglichen Ausrichtung des Tellers 15 und dem Ausrichtesignal bekannt. Für die nachfolgende Etikettenübergabe in dem Etikettierkarussell 14 werden die Teller 15 entlang der Transportrichtung der Flaschen 2 ausgerichtet, beispielsweise derart, dass eine lange Seite der rechteckigen Flaschen entlang der Transportrichtung, der Tangente an den Transportweg, ausgerichtet ist. Schließlich erfolgt die Etikettenübergabe durch eine als Etikettieraggregat 18 ausgeprägte Aufbringungsvorrichtung auf die Längsseite der rechteckigen Flaschen.

Bei den Etiketten kann es sich um vorgeschnittene oder abgetrennte Etiketten handeln. Auch Selbstklebeetiketten oder Schlauchetiketten sind denkbar. Es ist auch möglich, dass die Flaschen und/oder die Etiketten bedruckt werden.

Anschließend verlassen die etikettierten Flaschen 2 das Etikettierkarussell 14 in Richtung 19 eines Auslaufrads. Das Auslaufrad ist vergleichbar dem Einlaufstern 12 ausgeprägt und weist Greifer 6 auf, die die Flaschen 2 am Hals 7 greifen.

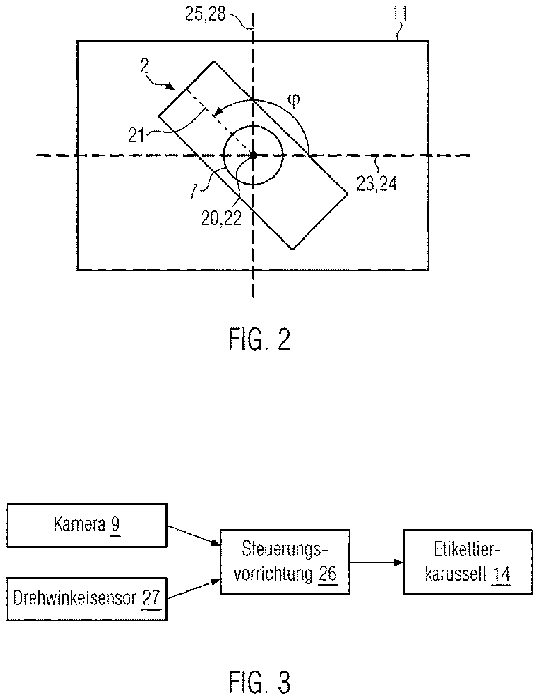

Fig. 2 zeigt schematisch eine Ansicht der Ausrichtung eines als rechteckige Flasche 2 ausgeprägten Behälters in der als Transferstern 5 ausgebildeten ersten Behältertransportvorrichtung.

Eine solche Ansicht kann beispielsweise durch eine oberhalb des Transportwegs und der Flasche 2 angeordnete Kamera 9 der Erfassungsvorrichtung, wie bei der Fig. 1 beschrieben, aufgenommen werden.

Die Ansicht zeigt in Draufsicht 11 eine rechteckige Flasche 2 mit einem runden Flaschenhals 7 zentral in der Bildmitte 20.

Eine große Halbachse 21 der Grundfläche des Behälters 2 ist um einen Winkel ϕ um eine zentrale Längsachse 22 (in die Bildebene hinein) des Behälters bezüglich einer Ebene 23, die tangential zu der Transportrichtung ist und in der die Achse 22 liegt, gedreht. Da die Bildmitte 20 auf die zentrale Längsachse 22 des Behälters ausgerichtet ist, liegt die horizontale bildhalbierende Achse 24 in der Ebene 23 und fällt mit der Transportrichtung zusammen.

Der Winkel ϕ ist charakteristisch für die Ausrichtung der Flasche 2 bezüglich der Transportrichtung der Flasche 2.

Der Winkel ϕ gibt eine Drehorientierung der Flasche 2 um eine zentrale senkrechte Achse 22 und/oder eine zentrale Längsachse 22 des Behälters bezüglich einer Ebene 23, die tangential zu der Transportrichtung ist und in der die Achse 22 liegt, an.

Es ist auch denkbar, einen anderen für die Ausrichtung der Flasche 2 charakteristischen Winkel anzugeben, beispielsweise einen Winkel bezüglich einer radialen Richtung 25 des Transfersterns, die im gezeigten Beispiel mit der vertikalen Bildachse 28 zusammenfällt.

In jedem Fall dient ein Winkel als charakteristische Größe für die Ausrichtung der Flasche 2 als Eingangsgröße für die Steuerungsvorrichtung 26 basierend auf welcher die Steuerungsvorrichtung 26 ein Ausrichtesignal für den entsprechenden Teller 15 als zweites Transportelement erzeugt.

Fig. 3 ist ein Blockdiagramm, das Zusammenhänge während des Betriebs des Behältertransportsystems 1 veranschaulicht.

Eine Steuerungsvorrichtung 26 umfassend einen Prozessor und eine Speichervorrichtung ist zur zentralen Steuerung von Vorgängen in dem Behältertransportsystem 1 vorgesehen. Die Behälter sind in diesem Ausführungsbeispiel rechteckige Flaschen 2.

Die Steuerungsvorrichtung 26 ist über ein Datenkabel zum Erhalten von Bildern 10 mit der Kamera 9, also der Erfassungsvorrichtung, verbunden.

Die Kamera 9 ist von oberhalb eines als Greifer 6 ausgebildeten ersten Transportelements auf den Greifer 6 und die von diesem gehaltene Flasche 2 gerichtet. Die Kamera 9 nimmt nacheinander Bilder 10 der Flaschen 2 auf, die in ihren jeweiligen Greifern 6 durch das Aufnahmefeld der Kamera 9 transportiert werden. Die Kamera 9 nimmt dabei immer dann ein Bild 10 auf, wenn eine Flasche zentral im Aufnahmefeld der Kamera 9 ist und sendet die Bilder 10 an die Steuerungsvorrichtung 26. Die Kamera 9 nimmt beispielsweise dann ein Bild 10 auf, wenn dies durch eine Lichtschranke, oder einen Kontakt an dem Greifer ausgelöst wird.

Die Steuerungsvorrichtung 26 erhält die Bilder 10 und wertet diese aus. Die Steuerungsvorrichtung 26 ermittelt beispielsweise eine für die Ausrichtung der Flaschen 2 charakteristische Größe wie den in der Fig. 2 gezeigten Winkel ϕ. Zur gleichen Zeit erhält die Steuerungsvorrichtung 26 Informationen von Drehwinkelsensoren 27, die an den als Tellern 15 ausgeprägten zweiten Transportelementen angebracht sind und die Ausrichtung der Teller 15 bezüglich der Transportrichtung messen.

In der Steuerungsvorrichtung 26 erfolgt wie unter Fig. 1 beschrieben die Zuordnung jedes Greifers 6 zu einem Teller 15 des Etikettierkarussells 14 als zweiter Behältertransportvorrichtung. Die Zuordnung erfolgt derart, dass der Teller 15 jeweils dem Teller 15 entspricht, der von dem jeweiligen Greifer 6 eine Flasche 2 übergeben bekommt.

Die Steuerungsvorrichtung 26 erzeugt Ausrichtesignale zum Ausrichten der Teller 15, die in einem Schieberegister zwischengespeichert werden, bis sie zum Ausrichtungszeitpunkt an das Etikettierkarussell 14 zum Ausrichten der Teller 15 gesendet werden. Die Ausrichtesignale geben beispielsweise an, um welchen Winkel ein bestimmter Teller 15 gedreht werden muss, um ausgerichtet zu sein. Die Ausrichtesignale können auch umfassen, dass ein bestimmter Teller 15 nicht gedreht werden muss, beispielsweise, weil er bereits ausgerichtet ist.

Die Flaschen 2 werden von den Greifern 6 an die ausgerichteten Teller 15 übergeben. Die ausgerichteten Teller 15 nehmen die Flaschen 2 an bzw. auf. Folglich werden Probleme bei der Übergabe vermieden.

Die Steuerungsvorrichtung 26 speichert die momentane Ausrichtung der Teller 15 nach der Übergabe, die sich aus den Ausrichtesignalen und den ursprünglichen Ausrichtungen der Teller 15 ergibt. Die ursprünglichen Ausrichtungen der Teller 15 ist dabei wie oben beschrieben aus den Informationen der Drehwinkelsensoren 27 bekannt.

Die Steuerungsvorrichtung 26 sendet Ausrichtesignale an das Etikettierkarussell 14, das die Flaschen 2 bezüglich der Transportrichtung ausrichtet, beispielsweise derart, dass Längsseiten der Flaschen 2 in Transportrichtung liegen.

Damit ist die passgenaue Übergabe der Etiketten auf die Längsseiten der Flaschen 2 gewährleistet.

## Patentansprüche

1. Behältertransportsystem zum Transport einer Mehrzahl von Behältern entlang eines Transportwegs umfassend:
eine erste Behältertransportvorrichtung mit einer Mehrzahl von ersten Transportelementen zum Halten und Transportieren der Behälter;
eine Erfassungsvorrichtung;
eine zweite Behältertransportvorrichtung mit einer Mehrzahl von zweiten Transportelementen zum Halten und Transportieren der Behälter, wobei die zweite Behältertransportvorrichtung entlang des Transportwegs nach der ersten Behältertransportvorrichtung angeordnet ist,
wobei die Erfassungsvorrichtung eingerichtet ist, die Ausrichtung eines von einem ersten Transportelement gehaltenen Behälters zu erfassen,
wobei die zweite Behältertransportvorrichtung eingerichtet ist, ein zweites Transportelement basierend auf der von der Erfassungsvorrichtung erfassten Ausrichtung des von dem ersten Transportelement gehaltenen Behälters auszurichten, um den Behälter aufzunehmen.

2. Behältertransportsystem nach Anspruch 1,
umfassend eine Steuerungsvorrichtung,
wobei die Steuerungsvorrichtung ausgebildet ist, basierend auf der erfassten Ausrichtung ein Ausrichtesignal zur Ausrichtung des zweiten Transportelements zu erzeugen.

3. Behältertransportsystem nach einem der vorangegangenen Ansprüche,
wobei die Erfassungsvorrichtung mit der zweiten Behältertransportvorrichtung drahtlos und/oder drahtgebunden verbunden ist.

4. Behältertransportsystem nach einem der vorangegangenen Ansprüche,
wobei das Behältertransportsystem zu einer Zuordnung des Ausrichtesignals zu dem zweiten Transportelement eine Speichervorrichtung, insbesondere ein Schieberegister, aufweist.

5. Behältertransportsystem nach einem der vorangegangenen Ansprüche,
wobei die zweite Behältertransportvorrichtung eingerichtet ist, das zweite Transportelement zum Ausrichten um eine senkrechte Achse zu drehen.

6. Behältertransportsystem nach einem der vorangegangenen Ansprüche,
wobei die ersten Transportelemente zum hängenden oder stehenden Transport der Behälter ausgebildet sind, und/oder
wobei die ersten Transportelemente im Fall der Ausbildung für den hängenden Transport Greifer umfassen, oder im Fall der Ausbildung für den stehenden Transport Teller mit Aufnahmen für die Behälter umfassen, und/oder
wobei die zweiten Transportelemente zum hängenden oder stehenden Transport der Behälter ausgebildet sind, und/oder
wobei die zweiten Transportelemente im Fall der Ausbildung für den hängenden Transport Greifer umfassen, oder im Fall der Ausbildung für den stehenden Transport Teller mit Aufnahmen für die Behälter umfassen, und/oder
wobei es sich bei den Behältern um Flaschen handelt.

7. Behältertransportsystem nach Anspruch 6,
wobei die Teller im Fall der Ausbildung für den stehenden Transport eine von der kreisrunden Form abweichende, insbesondere eine elliptische oder polygonale, insbesondere eine rechteckige, insbesondere eine quadratische, Grundfläche aufweisen.

8. Behältertransportsystem nach einem der vorangegangenen Ansprüche,
wobei die Erfassungsvorrichtung eine Bilderfassungsvorrichtung, insbesondere eine Kamera, aufweist, und/oder
wobei die Erfassungsvorrichtung einen Drehwinkelsensor, insbesondere einen Drehwinkelsensor basierend auf einem Potentiometer, aufweist, und/oder
wobei die Erfassungsvorrichtung im Fall der Bilderfassungsvorrichtung ausgebildet ist, ein erstes Transportelement von unterhalb und/oder oberhalb und/oder seitlich zu erfassen, und/oder
wobei die Erfassungsvorrichtung im Fall der Bilderfassungsvorrichtung ausgebildet ist, die Ausrichtung des von dem ersten Transportelement gehaltenen Behälters durch die Aufnahme eines Bildes zu erfassen.

9. Behältertransportsystem nach einem der vorangegangenen Ansprüche,
wobei das Behältertransportsystem eingerichtet ist, die Ausrichtung ohne Unterbrechung des Transports des Behälters zu erfassen.

10. Behältertransportsystem nach einem der vorangegangenen Ansprüche,
wobei die zweite Behältertransportvorrichtung einen Stell- und/oder Schritt- und/oder Servomotor umfasst,
wobei das zweite Transportelement durch den Stell- und/oder Schritt- und/oder Servomotor ausgerichtet wird.

11. Behältertransportsystem nach einem der vorangegangenen Ansprüche,
wobei das Behältertransportsystem Teil eines Blocks ist, und/oder
wobei die zweite Behältertransportvorrichtung ein Karussell ist, und/oder
wobei die erste Behältertransportvorrichtung ein Transferstern oder ein Einlaufstern ist.

12. Behältertransportsystem nach einem der vorangegangenen Ansprüche,
umfassend eine Aufbringungsvorrichtung,
wobei die Aufbringungsvorrichtung ausgebildet ist, Etiketten auf die Behälter der zweiten Behältertransportvorrichtung aufzubringen und/oder die Behälter der zweiten Behältertransportvorrichtung zu bedrucken.

13. Behältertransportsystem nach Anspruch 12,
wobei die zweite Behältertransportvorrichtung ausgebildet ist, das zweite Transportelement nach dem Aufnehmen des Behälters in eine vordefinierte Ausrichtung, insbesondere in Transportrichtung, auszurichten.

14. Behältertransportsystem nach einem der vorangegangenen Ansprüche,
wobei die zweite Behältertransportvorrichtung entlang des Transportwegs direkt nach der ersten Behältertransportvorrichtung folgt, oder eine weitere Behältertransportvorrichtung dazwischen angeordnet ist.

15. Verfahren zum Transport einer Mehrzahl von Behältern in einem Behältertransportsystem nach einem der vorangegangenen Ansprüche, umfassend:
Erhalten einer Ausrichtung eines von einem ersten Transportelement gehaltenen Behälters von der Erfassungsvorrichtung,
Bestimmen des dem Behälter bei der Übergabe entsprechenden zweiten Transportelements aus der Menge der zweiten Transportelemente,
Berechnen einer Soll-Ausrichtung des zweiten Transportelements basierend auf der Ausrichtung,
Ansteuern und Ausrichten des zweiten Transportelements gemäß der Soll-Ausrichtung,
Übergeben des Behälters von dem ersten Transportelement an das zweite Transportelement.
